# EUROPÄISCHE PATENTSCHRIFT

(11) **EP 3 544 223 B1**
(45) Veröffentlichungstag und Bekanntmachung des Hinweises auf die Patenterteilung: **13.05.2020**
(21) Anmeldenummer: 18162719.1
(22) Anmeldetag: 20.03.2018
(51) Int. Cl.: H04L 9/08, H04L 9/32

(54) **VERFAHREN UND SYSTEM ZUM ABHÖRSICHEREN AUSTAUSCH VON SCHLÜSSELMATERIAL**
METHOD AND SYSTEM FOR EXCHANGING KEY MATERIAL WITH NO POSSIBILITY OF INTERCEPTION
PROCÉDÉ ET SYSTÈME D'ÉCHANGE SÉCURISÉ D'UN MATÉRIAU CRYPTOGRAPHIQUE

(43) Veröffentlichungstag der Anmeldung: 25.09.2019
(73) Patentinhaber: Deutsche Telekom AG, 53113 Bonn (DE)
(72) Erfinder: GUNKEL, Matthias, Dr., 64291 Darmstadt (DE); WISSEL, Felix, Dr., 64372 Ober-Ramstadt (DE); KUSSEL, Tobias, 64285 Darmstadt (DE)
(74) Vertreter: Raible Deissler Lehmann Patentanwälte PartG mbB

(56) Entgegenhaltungen:
- WO-A1-2016/172375
- DE-A1-102014 207 026
- US-A1- 2010 265 077
- KAORU SHIMIZU ET AL: "Communication channels secured from eavesdropping via transmission of photonic Bell states", PHYSICAL REVIEW A (ATOMIC, MOLECULAR, AND OPTICAL PHYSICS), Bd. 60, Nr. 1, 1. Juli 1999 (1999-07-01), Seiten 157-166, XP055508165, USA ISSN: 1050-2947, DOI: 10.1103/PhysRevA.60.157
- NICOLAS GISIN ET AL: "Quantum Cryptography", ARXIV.ORG, CORNELL UNIVERSITY LIBRARY, 201 OLIN LIBRARY CORNELL UNIVERSITY ITHACA, NY 14853, 19. Januar 2001 (2001-01-19), XP080040705, DOI: 10.1103/REVMODPHYS.74.145

## Beschreibung

Die vorliegende Erfindung betrifft ein Verfahren und ein System zum abhörsicheren Austausch von Schlüsselmaterial zwischen einem Sender und einem Empfänger für einen Schlüssel zur Verschlüsselung einer zu versendenden Nachricht.

In modernen Kommunikationsnetzen spielen kryptologische Konzepte, wie Datensicherheit, Vertraulichkeit und Zuverlässigkeit eine große Rolle. Unter diesen Konzepten versteht man, dass zwei Parteien, d. h. Sender und Empfänger, Daten austauschen können, ohne dass diese Daten von Dritten abgehört werden und ohne dass die Daten während des Austauschs verändert werden. Ferner ist es wichtig, dass die beiden Parteien sicher wissen, mit wem sie kommunizieren. Im englischsprachigen Raum spricht man dabei von "confidentiality" (Vertraulichkeit), "authenticity" (Echtheit) und "integrity" (Vollständigkeit). Ferner hat sich der Sprachgebrauch dahingehend entwickelt, dass die Parteien, die die Daten austauschen, als "Alice" und "Bob" und bösartige Dritte, d. h. Angreifer, mit dem Namen "Eve" (aus dem Englischen von "to eavesdrop" - abhören) bezeichnet werden.

Es ist nachweisbar, dass eine Verschlüsselung mit einem sogenannten One-Time-Pad (Einmal-Pad), d. h. für jede Übertragung von Daten wird ein neuer Schlüssel generiert, informationstheoretisch sicher ist. Das bedeutet, dass Eve keine Möglichkeit hat, aus einem abgehörten Datenstrom auf einen Informationsinhalt dieses Datenstroms zu schließen. Das One-Time-Pad ist dabei der Schlüssel, der genauso lang wie die zu verschlüsselnde Nachricht sein muss und keine innere Struktur haben darf. Das bedeutet, dass der Schlüssel bzw. das One-Time-Pad absolut zufällig sein muss und keine Korrelationen zwischen den von ihm umfassten einzelnen Komponenten haben darf. In der Regel ist eine ursprüngliche Nachricht, d. h. eine Originalnachricht, die von Alice zu Bob geschickt wird, als Bitfolge aus Nullen und Einsen darstellbar. Diese Nachricht sei M (englisch "Message" - Nachricht) genannt. Das One-Time-Pad nennt man K (englisch "Key" - Schlüssel) und die letztlich übertragene verschlüsselte Nachricht wird C (englisch "Cyphertext" - codierte Nachricht) genannt. Man erzeugt die verschlüsselte Nachricht, indem man die Nachricht M mit dem Schlüssel bitweise ver-XOR-t, d. h. das Exklusiv-Oder als Bitweiser Operator auf die Nachricht M und den Schlüssel anwendet. Dabei ist zu beachten, dass der Schlüssel K nur einmal zu verwenden ist, damit sich der Schlüssel K nicht aus zwei oder mehreren abgehörten Cyphertexten C1 und C2 eliminieren lässt. Die Sicherheit dieses Ansatzes liegt darin, dass ein Raum bzw. eine Menge von möglichen sinnvollen Nachrichten zu groß ist. Selbst wenn Eve aus dem codierten Cyphertext C eine Nachricht M' rekonstruiert hat, kann sie nicht sicher sein, ob M' mit M übereinstimmt.

Demnach scheint das eigentliche Verschlüsselungsproblem durch den Einsatz von One-Time-Pads gelöst zu sein. Allerdings ist darauf hinzuweisen, dass sich dadurch ein weiteres Problem ergibt, da es nun notwendig ist, den Schlüssel K zwischen Alice und Bob auszutauschen, ohne dass Eve den Schlüssel K abhören kann, ihn manipulieren kann oder einer der Parteien, d. h. Alice oder Bob, vorgaukelt, Alice respektive Bob zu sein. Dazu ist nun ein geeignetes Schlüsselaustauschverfahren notwendig. Anders als die eigentliche Verschlüsselung, die ja mit demselben Schlüssel K bei Alice und Bob funktioniert und deshalb "symmetrisch" genannt wird, ist der Schlüsselaustausch bzw. das Schlüsselaustauschverfahren ein asymmetrisches Verfahren, das darauf aufbaut, dass Alice und Bob jeweils einen öffentlichen und einen privaten Teil des Schlüssels besitzen.

Bislang bekannte etablierte Verfahren, die diese Paare von "Public Key" und "Private Key" einsetzen, beruhen im Wesentlichen alle auf sogenannten Einweg-Funktionen. Diese stellen mathematische Probleme dar, die einerseits leicht zu lösen sind, deren Umkehrfunktion andererseits jedoch nur mit großem Aufwand zu berechnen ist. Ein typisches Problem dieser Art ist eine Faktorisierung von großen Zahlen. Wählt man zwei große Primzahlen p und q, so lässt sich das Produkt N = p^{∗}q sehr schnell, d. h. in der Regel innerhalb von wenigen Millisekunden, ausrechnen. Ist allerdings nur das Produkt N gegeben, gibt es bislang keinen mathematischen Algorithmus, um die beiden Primzahlen bzw. Primfaktoren p und q effizient zu bestimmen. Mit Ausnahme von einigen heuristischen Ausschlussbedingungen, bspw. dass die Primfaktoren ungerade sein müssen, bleibt einem Angreifer, d. h. Eve, nur eine sogenannte Brute-Force-Methode. Gegen immer besser werdende Computer-Hardware und der damit einhergehenden schnelleren Berechenbarkeiten schützt man sich, indem man zu immer größer werdenden Schlüsseln übergeht. Im Gegensatz zu der informationstheoretischen Sicherheit der One-Time-Pads spricht man hier von der sogenannten "Computational Security", d. h. dass man im Prinzip nicht gegen Angriffe geschützt ist, sondern lediglich ein Aufbrechen des Codes bzw. des Schlüssels so schwer wie möglich macht. Für die beiden prominentesten Verfahren, die im Moment eingesetzt werden - DH/DHM (Diffie-Hellmann bzw. Diffie-Hellmann-Merkle) und RSA (Rivest, Shamir und Adleman) - verwendet man Schlüssellängen von bis zu 2.048 Binärstellen.

In absehbarer Zeit wird es jedoch kommerziell verfügbare, hinreichend leistungsfähige Quantencomputer geben. Quantencomputer nutzen einen quantenmechanischen Effekt, nämlich, dass auf mikroskopischen Längenskalen eine Überlagerung von Quantenzuständen möglich ist. Ohne hier auf Details einzugehen, ist ein Quantencomputer derart vorstellbar, dass er nicht mit Nullen oder Einsen rechnet, d. h. den traditionalen Bits, sondern mit sogenannten Qubits, die gleichzeitig einen Wert 0 und 1 annehmen können. Damit muss man für das oben genannte Faktorisierungsproblem nicht mehr alle Kombinationen nacheinander ausprobieren, sondern kann all diese Kombinationen gleichzeitig testen. Unter Laborbedingungen ist es bereits heute möglich, mit einem Quantencomputer kleinere Produkte, wie bspw. 15 oder 21 in ihre Faktoren zu zerlegen.

Es ist demnach scheinbar nur eine Frage der Zeit, bis auch Produkte von größeren Primzahlen zerlegt werden können. Hierbei sei verwiesen auf "Quantum factorization of 56153 with only 4 qubits", Nikesh S. Dattani, Nathaniel Bryans, 2014, https://arxiv.org/abs/1411.6758, in welchem mit einigem Vorwissen N=56143 faktorisiert wird, wobei das darin offenbarte Verfahren noch keine Aussage über eine Größenordnung beliebiger N trifft. Experten schätzen gemäß "Cybersecurity in an era with quantum computers: will we be ready?", Michele Mosca, 2015, https://eprint.iacr.org/2015/1075.pdf, dass die Wahrscheinlichkeit dafür, dass RSA-2048 bis zum Jahr 2026 gebrochen wird, bei einem Siebtel und im Jahr 2031 bei 50 % liegt.

Generell ist festzuhalten, dass mit einer baldigen Verfügbarkeit von Quantencomputern im Prinzip alle herkömmlichen, heute verwendeten asymmetrischen Verschlüsselungsverfahren hinfällig sein werden.

Vor diesem Hintergrund wurden neue garantiert sichere Schlüsselaustauschverfahren vorgeschlagen. Diese beruhen ebenfalls auf quantenmechanischen Effekten und bieten dadurch die Möglichkeit, über eine statistische Analyse der Eigenschaften des ausgetauschten Schlüssels Rückschlüsse zu ziehen darauf, ob der Schlüssel abgehört wurde oder nicht. Falls diese Analyse ergibt, dass der Schlüssel in irgendeiner Weise kompromittiert ist, wird er verworfen und ein neuer Schlüsselaustausch angestoßen. Das ist unkritisch, denn solange kein sicherer Schlüssel etabliert wurde, sind keine möglicherweise sensiblen Daten zwischen Alice und Bob kommuniziert worden, und diese Daten sind das eigentliche Angriffsziel von einem potentiellen Angreifer Eve.

Bei sogenannten QKD (Quantum Key Distribution - Quantenschlüsselauswahlverfahren) werden zwei quantenmechanische Prinzipien ausgenutzt. Das ist zum einen das "No-Cloning-Theorem", das verhindert, eine hundertprozentige Kopie eines beliebigen, unbekannten quantenmechanischen Systems zu erzeugen. Zum anderen ist es das Prinzip, das besagt, dass bei einer Messung eines quantenmechanischen Systems dieses System in einen sogenannten Eigenzustand des Operators gezwungen wird, der mathematisch die Observable repräsentiert, die gemessen wurde.

Dies wird an nachfolgendem Beispiel erläutert: Linear polarisierte Photonen können die Richtung "senkrecht" oder "waagerecht" einnehmen. Gleiches gilt für Polarisationsfilter. Dabei wird ein "senkrechtes" Photon immer durch einen Polarisationsfilter gehen, der in die "Senkrechtrichtung" eingestellt ist und niemals durch einen "waagerechten" Polarisationsfilter. Man sagt, diese beiden Richtungen sind orthogonal zueinander. Dieser Befund ist absolut. Allerdings sind die gewählten Richtungen "senkrecht" und "waagerecht" willkürlich. Die beiden Achsen sollen die Namen "V" und "H" bekommen. Beide zusammen bilden ein Basissystem, das "+" genannt sei.

Eine andere mögliche Wahl sind zwei orthogonale Achsen, die bezüglich der V- und H-Achse um 45 ° verdreht sind. Man kann sie sich als die "Diagonalen" vorstellen, und diese Basis sei "x" genannt. Folglich liegen zwei Basis-Systeme vor, nämlich das +-System mit den Achsen H und V und das x-System mit den Achsen D1 (bspw. +45 °) und D2 (bspw. -45 °). Für eine Beschreibung eines polarisierten Photons sind beide Systeme gleichwertig. Nur jeweilige Komponenten des Polarisationsvektors ändern sich, wenn man die Basen als Koordinatensystem interpretiert. Ein Photon, das in der + - Basis vertikal polarisiert ist, hat die Koordinaten 1 und 0. Dasselbe Photon wird in der x - Basis mit den Koordinaten 1/2 und -1/2 dargestellt. Ein "x-Photon" wird in der x - Basis immer einen exakten Treffer ergeben. Dies bedeutet, dass man einen Polarisationszustand exakt messen kann. Wird das "x-Photon" allerdings in der + - Basis gemessen, gibt es eine 50/50 Chance (d.h. eine 50-zu-50 Chance) für die Detektion eines Zustands "in der + - Basis senkrecht" oder "in der + - Basis waagerecht" polarisiert.

Das eigentliche voranstehend genannte Schlüsselaustauschverfahren beruht darauf, dass Alice Photonen in einem zufälligen Polarisationszustand bezüglich der beiden möglichen Basen an Bob sendet und Bob ebenso zufällig in einer der Basen misst. Nach dem Messen tauschen sich Bob und Alice über einen klassischen Datenkanal darüber aus, in welcher Basis gesendet und gemessen wurde, ohne das Ergebnis der Messungen offenzulegen. Statistisch stimmen die Basen in 50 % der Fälle überein. Die Photonen dieser Messung werden dann verwendet, um eine Bitfolge von Nullen und Einsen zu generieren, bspw. nach einer Konvention, dass die H-Achse in der + - Basis einer 1 entspricht, die V-Achse einer 0 und analog in der x - Basis. Da Eve weder wissen kann, was Alice sendet noch was Bob misst, wird sie gezwungen, Fehler zu machen. Sie hat nämlich ebenfalls eine 50 %-ige Chance, in der richtigen Basis zu messen, wenn sie Photonen abhört. Sie hat aber Bob gegenüber noch einmal eine 50 %-ige Chance, da sie neue Photonen generieren muss, damit sie nicht sofort als Abhörer entdeckt wird. Im Mittel liegt sie also nur in einem Viertel der Fälle richtig, und diese erzwungenen Fehler können Alice und Bob durch eine Nachverarbeitung und statistische Analyse der Bitfolge erkennen. Dafür muss ein Teil des Schlüsselrohmaterials geopfert werden. Dieser Teil der Nachverarbeitung wird "Privacy Amplification" genannt.

Neben dem oben skizzierten Verfahren, das sich an das sogenannte BB84-Protokoll anlehnt, wie bspw. in "Quantum cryptography", Nicolas Gisin, Gregoire Ribordy, Wolfgang Tittel, and Hugo Zbinden, Reviews Of Modern Physics, Volume 74, January 2002 beschrieben, gibt es einige andere Varianten, die sich auf die eine oder andere Weise quantenmechanische Eigenschaften von Photonen zunutze machen. Allen bisher bekannten Verfahren, inklusive des oben beschriebenen Verfahrens, ist gemeinsam, dass einzelne Photonen, d.h. allgemein Quanten, Träger von Quanteninformationen sind. Deshalb ist eine erreichbare Schlüsselrate im Vergleich zu den sonst in der optischen Übertragungstechnik möglichen Datenraten sehr viel kleiner. Eine typische Größenanordnung für den Quantenschlüsselstrom liegt zwischen wenigen Photonen pro Sekunde bis in den Bereich von kbits/s oder Mbit/s. Es ist dabei zu beachten, dass hohe Schlüsselraten nur für sehr geringe Reichweiten möglich sind. Auf der anderen Seite sind klassische Transportschnittstellen mit einigen hundert GBit/s Stand der Technik und mit Ausnutzung höherer Modulationsformate und kohärenten Empfängern lassen sich bald auch Datenraten von Terabit/s erreichen. Offensichtlich sind die QKD-Schlüsselraten damit verglichen nicht ausreichend.

In dem Dokument von Kaoru Shimizu und Nobuyuki Imoto "communication channels secured from eavesdropping via transmission of photonic Bell states" wird ein Verfahren zur abhörsicheren Kommunikation mittels verschränkten Photonen beschrieben, wobei die verschränkten Photonen zum Übertragen von Bits einer verschlüsselten Nachricht in einer Quantenbasis und von Testbits in einer anderen Quantenbasis genutzt werden. Dabei werden die verschränkten Photonen auf verschiedenen optischen Pfaden übertragen.

In der US 2010/265077 A1 wird eine Verwendung von quantenmechanisch verschränkten Photonen zur Überwachung der Integrität einer physikalischen Grenze oder einer Kommunikationsverbindung beschrieben.

Vor diesem Hintergrund war es eine Aufgabe der vorliegenden Erfindung, eine Möglichkeit vorzusehen, einen abhörsicheren Austausch von Schlüsselmaterial mit einer erhöhten Schlüsselaustauschrate in einem Glasfasernetz bereitzustellen.

Zur Lösung dieser Aufgabe stellt die vorliegende Erfindung ein Verfahren und ein System mit den Merkmalen der unabhängigen Patentansprüche vor.

Weitere Vorteile und Ausgestaltungen der Erfindung ergeben sich aus der Beschreibung und der beiliegenden Zeichnung.

Es wird ein Verfahren zum abhörsicheren Austausch von Schlüsselmaterial zwischen einem Sender und einem Empfänger für einen Schlüssel zur Verschlüsselung einer Nachricht in einem Glasfasernetz vorgeschlagen. Dabei werden mindestens zwei Quanten, insbesondere zwei Photonen, miteinander verschränkt und je ein Photon über je einen Quantenkanal eines Glasfaserkabels mit einer Wellenlänge λ_{EQSE} von dem Sender zu dem Empfänger gesendet. Dabei sind die mindestens zwei Quantenkanäle, insbesondere die entsprechend zu genau zwei Photonen zwei Quantenkanäle, zueinander disjunkt, d. h. insbesondere getrennt und elementfremd zueinander.

Erfindungsgemäß wird nun zu einem zufällig gewählten Zeitpunkt und für eine zufällig gewählte Dauer über einen Datenkanal, der einem der disjunkten Quantenkanäle durch zufällige Auswahl überlagert wird, in einer Schlüsselsendephase das Schlüsselmaterial von dem Sender zu dem Empfänger gesendet, wobei der Datenkanal im Vergleich zu den jeweiligen mindestens zwei Quantenkanälen für eine um mehrere Größenordnungen höhere Leistung ausgelegt wird.

Erfindungsgemäß wird demnach eine Informationsübertragung für den auszutauschenden Schlüssel von einer Nachweisbarkeit, ob eine Vertraulichkeitsverletzung bei der Übertragung stattgefunden hat, also dass ein Dritter, d. h. Eve mitgehört hat, getrennt. Dieser Nachweis, ob ein unbefugter Dritter mitgehört hat, wird weiterhin mit einem bzw. mehreren Quantenkanälen, insbesondere mit zwei Quantenkanälen, geführt. Als Träger einer Quanteneigenschaft werden erfindungsgemäß unmodulierte verschränkte Photonen "Entangled Quantum State Emission", kurz EQSE, verwendet. Verschränkung meint dabei allgemein, dass mindestens zwei Photonen, d.h. allgemein mindestens zwei quantenmechanischen Systemen eine gemeinsame Eigenschaft aufgeprägt wird, die aufgrund der Gesetze der Quantenmechanik auch über große Distanzen aufrechterhalten und nicht ohne Zerstörung der Verschränkung der Photonen, d.h. allgemein der quantenmechanischen Systeme/Teilchen aufgelöst werden kann. Das bedeutet, dass die mindestens zwei Photonen auf eine bestimmte Weise miteinander verbunden sind, d.h. die verschränkten Teilchen befinden sich in einem gemeinsamen Quantenzustand, was im Wesentlichen bedeutet, dass die Eigenschaften der verschränkten Teilchen voneinander abhängen. Ändert eines der Teilchen eine seiner Eigenschaften, dann muss das dazu verschränkte Teilchen dies augenblicklich auch tun - unabhängig davon, wie weit die Teilchen voneinander entfernt sind. Verschränkung liegt vor, wenn ein Zustand eines Systems von zwei oder mehr Teilchen (Quanten, bspw. Photonen) sich nicht als Kombination unabhängiger Ein-Teilchen-Zustände beschreiben lässt, sondern nur durch einen gemeinsamen Zustand. Das bedeutet, dass Messergebnisse bestimmter Observablen verschränkter Teilchen korreliert, d.h. nicht statistisch unabhängig sind, auch wenn die Teilchen weit voneinander entfernt sind. Dies basiert auf einer Beschreibung einer Gesamtwellenfunktion mit nicht-separablen Koeffizienten einer jeweiligen Einteilchenbasis und hat zur Folge, dass eine unabhängige Messung an den mindestens zwei räumlich beliebig weit getrennten Photonen bzw. allgemein Quanten immer den gemeinsamen Quantenzustand bildende komplementäre Ergebnisse ergibt. Hierbei sei auf die berühmte Einsteinsche Formulierung der "spukhaften Fernwirkung" hingewiesen. Für Photonen bedeutet das bspw., dass ihre Gesamtpolarisation, d. h. die Summe der Einzelpolarisationen, sich immer zu 0 aufheben muss, wenn die Photonen aus einem Ursprungszustand ohne Polarisation entstanden sind. Diese Eigenschaft gilt in jeder beliebigen vollständigen Basis. Generell muss sich die erfindungsgemäß vorgesehene Verschränkung der Photonen nicht auf eine Korrelation der jeweiligen Polarisation der Photonen (Quanten) beschränken. Eine derartige Verschränkung kann in vielen Varianten, die einem Fachmann bekannt sind, realisiert werden.

Erfindungsgemäß sendet der Sender, d. h. Alice, solche verschränkten Photonen bei einer Wellenlänge λ_{EQSE} über zwei oder mehrere unabhängig, d. h. disjunkt geführte Glasfasern bzw. Quantenkanäle zu dem Empfänger, d. h. Bob.

Gemäß einer möglichen Ausgestaltung des erfindungsgemäßen Verfahrens prüft der Empfänger, d. h. Bob, in beliebig gewählten zeitlichen Abständen in einer sogenannten Bellmessung, ob die von dem Empfänger empfangenen Photonen zum Zeitpunkt der Bellmessung noch miteinander verschränkt sind. Dadurch kann überprüft werden, ob zu diesem Zeitpunkt, d. h. zum Zeitpunkt der Bellmessung, auf einem oder mehreren beliebigen oder allen Streckenabschnitten zwischen dem Sender und dem Empfänger und bei der betrachteten Wellenlänge λ_{EQSE} ein potentieller Abhörer existiert.

Gemäß einer weiteren Ausgestaltung des erfindungsgemäßen Verfahrens stellt der Empfänger, falls die Bellmessung ergibt, dass die Photonen nicht verschränkt sind, fest, dass zum Zeitpunkt der Bellmessung auf mindestens einem der mindestens zwei Quantenkanäle bzw. Streckenabschnitte und bei der Wellenlänge λ_{EQSE} ein potentieller Abhörer existiert, wobei dann zumindest das in der zuletzt vorangegangenen Schlüsselsendephase über den Datenkanal übermittelte Schlüsselmaterial verworfen wird. Ein unbefugter Dritter, hier Eve, hat nämlich durch ein Abhören mindestens einer Glasfaser bzw. eines der mehreren Quantenkanäle selbst eine Messung an mindestens einem der Photonen durchgeführt und damit die Verschränkung zwischen den Photonen aufgelöst bzw. gestört.

Gemäß dem erfindungsgemäßen Verfahren wird der Datenkanal im Vergleich zu den jeweiligen mindestens zwei Quantenkanälen für eine um mehrere Größenordnungen höhere Leistung ausgelegt.

Zu zufälligen Zeiten und für eine zufällige Dauer und demnach für einen Abhörer, also Eve, nicht vorhersehbar, versendet der Sender, d. h. Alice, auf dem leistungsstarken Datenkanal, der einem der mindestens zwei disjunkten Quantenkanäle überlagert ist, ebenfalls bei der Wellenlänge λ_{EQSE} geheimes Schlüsselmaterial.

Gemäß einer möglichen Ausgestaltung ist es denkbar, dass derjenige Quantenkanal, dem der Datenkanal überlagert wird, für die Dauer der Übertragung des Schlüsselmaterials über den Datenkanal deaktiviert bzw. abgeschaltet wird. Das muss aber nicht notwendigerweise geschehen, denn die Photonen, die über die Quantenkanäle übertragen werden, werden praktisch vollständig durch den massiven Photonenstrom, mit dem das Schlüsselmaterial über den Datenkanal gesendet wird, maskiert, wobei der Datenkanal, wie voranstehend erwähnt, eine um mehrere Größenordnungen höhere Leistung aufweist und demnach ein Eigenrauschen hat, dessen Varianz ebenfalls ein Vielfaches über der eines der mindestens zwei Quantenkanäle liegt.

In möglicher Ausgestaltung des erfindungsgemäßen Verfahrens sind bzw. werden die Photonen, die originär aus einem Ursprungszustand ohne Polarisation entstanden sind, auf Seiten des Senders derart miteinander verschränkt, dass eine Summe der jeweiligen Polarisation der Photonen eine Gesamtpolarisation von 0 ergibt. Wie voranstehend erwähnt, muss sich die erfindungsgemäß vorgesehene Verschränkung der Photonen nicht auf eine Korrelation der jeweiligen Polarisation der Photonen (Quanten) beschränken. Eine derartige Verschränkung kann in vielen Varianten, die einem Fachmann bekannt sind, realisiert werden.

In weiterer Ausgestaltung des erfindungsgemäßen Verfahrens stellt der Empfänger, d. h. Bob, falls die Bellmessung ergibt, dass die Photonen noch verschränkt sind, fest, dass zum Zeitpunkt der Bellmessung auf keinem der mindestens zwei Quantenkanäle und bei der Wellenlänge λ_{EQSE} ein potentieller Abhörer existiert und bestätigt die in einer den Zeitpunkt der Bellmessung umfassenden oder dem Zeitpunkt der Bellmessung unmittelbar vorangegangenen Schlüsselsendephase übermittelten Schlüsselanteile des Schlüsselmaterials gegenüber dem Sender, d. h. Alice, über den Datenkanal. Eine unmittelbar vorangegangene Schlüsselsendephase bedeutet dabei die Schlüsselsendephase, die zuletzt vor Durchführung der Bellmessung vorlag bzw. stattfand. Der Empfänger, d. h. Bob, stellt in einer Nachbearbeitungsphase zu der Bellmessung anhand einer statistischen Analyse fest, ob ein Indiz für ein Abhören gegeben war, und wenn nicht, bestätigt er gegenüber dem Sender das in der vorangegangenen Schlüsselsendephase übermittelte Schlüsselmaterial über den Datenkanal.

Eine derartige Bestätigung kann durch eine zeitliche Synchronisation zwischen Sender und Empfänger und/oder anhand einer der den Zeitpunkt der Bellmessung umfassenden oder dem Zeitpunkt der Bellmessung unmittelbar vorangegangenen Schlüsselsendephase zugeordneten Sendenummer, wobei alle Schlüsselsendephasen durchnummeriert und mit einer jeweiligen Sendenummer versehen werden, und/oder durch ein Kontrollprotokoll bestätigt werden.

Der im Vergleich zu den jeweiligen Quantenkanälen leistungsstarke Datenkanal kann erfindungsgemäß zeitlich einfach hinzugeschaltet und abgeschaltet werden. Dieses zeitlich zufällige Hinzunehmen des eigentlich für den Abhörer, d. h. Eve, interessanten Datenkanals zwingt den Abhörer Eve dazu, ständig oder in kurzen regelmäßigen Abständen eine Messung vornehmen zu müssen. Sofern Eve hierbei zeitlich in die Phase der Übertragung der verschränkten Photonen über die Quantenkanäle trifft, stört sie hierbei jedes Mal die Verschränkung, was wiederum bei dem Empfänger, d. h. bei Bob, als ein Abhören nachweisbar ist. Da Eve nicht wissen kann, welchem der beiden disjunkten Quantenkanäle im nächsten Schritt bzw. bei der nächsten Schlüsselsendephase der Datenkanal überlagert wird und somit wo das Schlüsselmaterial übermittelt wird, kann sie nicht allein auf eine Überwachung der Intensität vertrauen, wobei sie selbst dabei die Verschränkung der Photonen auflösen würde. Wichtig ist, dass sowohl der Zeitpunkt des Zuschaltens des Datenkanals als auch die Dauer der jeweiligen Schlüsselsendephasen zufällig sind, damit Eve keine optimale Strategie entwickeln kann, um nicht doch einen kleinen Informationsvorteil zu erlangen.

Zur weiteren Absicherung des eigentlichen Informationsaustauschs, d. h. des Schlüsselmaterials zwischen dem Sender und dem Empfänger, wird analog zu dem erfindungsgemäßen Verfahren zwischen Sender und Empfänger, d. h. zwischen Alice und Bob, ein gleiches Verfahren zwischen dem Empfänger und dem Sender, d. h. zwischen Bob und Alice, realisiert. Das heißt, das Verfahren wird gleichermaßen zwischen Empfänger und Sender, mit vertauschten Rollen, durchgeführt.

Erfindungsgemäß ist vorgesehen, dass zusätzlich zu dem vom Sender zum Empfänger übermittelten Schlüsselmaterial umgekehrt Schlüsselmaterial vom Empfänger zum Sender übermittelt wird, wobei dabei dann der Empfänger als Sender und der Sender als Empfänger agiert, und ein voranstehend beschriebenes Verfahren ausgeführt wird.

Ferner ist vorgesehen, dass sich Sender und Empfänger in festgelegten zeitlichen Intervallen auf innerhalb eines jeweiligen Intervalls auf Sender- und Empfängerseite angesammeltes Schlüsselmaterial einigen, was dann sowohl auf Sender- als auch auf Empfängerseite ver-XOR-t wird, wodurch sowohl auf Sender- als auch auf Empfängerseite jeweils ein Teil eines symmetrischen Schlüssels als der Schlüssel zur Verschlüsselung der Nachricht erzeugt wird.

Das Schlüsselmaterial auf beiden Seiten besteht aus dem jeweils selbst versandten Rohschlüssel und dem abhörgeschützten jeweils empfangenen Rohschlüssel. Jeder der Partner, d. h. Sender und Empfänger, ver-XOR-t diese beiden Schlüsseltypen und erzeugt damit auf seiner Seite seinen Teil des symmetrischen Schlüssels.

Da die Wellenlängen der verschränkten Photonenpaare und die des Datenkanals identisch sind, hier mit λ_{EQSE} bezeichnet, ist ein Angriff mit einem optischen Filter nicht möglich. Auch eine gezielte Attacke bzw. ein Angriff auf die zeitlichen Phasen des Datenkanals, d. h. auf die Schlüsselsendephasen, kann ausgeschlossen werden. Wenn ein unbefugter Dritter, wie insbesondere Eve, zufällig in der Phase des leistungsstarken Datenkanals, der den geheimen Schlüssel beinhaltet, d. h. in einer Schlüsselsendephase, abhört, könnte sie Teile des Geheimnisses mithören. Daher wird das zeitliche Umtasten zwischen einzelnen Quantenübertragungen, d. h. Übertragung der verschränkten Photonen über die Quantenkanäle und leistungsstarken Datenkanälen, d. h. Übertragung des Schlüsselmaterials in den Schlüsselsendephasen über den Datenkanal, als Zufallsprozess realisiert. Es ist dabei erfindungsgemäß vorgesehen, dass dies so gewählt wird, dass das Zeitfenster für den quantenmechanischen EQSE-Anteil, d. h. die alleinige Übertragung der verschränkten Photonen über die mindestens zwei zueinander disjunkten Quantenkanäle, lang genug ist für eine zuverlässige Statistik der von der Empfängerseite durchzuführenden Bellmessung, aber auch so kurz wie möglich ist, um eine akzeptabel hohe Schlüsselaustauschrate über den leistungsstarken Datenkanal zu erzielen, d. h. eine akzeptabel hohe Rate von aufeinanderfolgenden Schlüsselsendephasen.

Die vorliegende Erfindung betrifft ferner ein System zum abhörsicheren Austausch von Schlüsselmaterial zwischen einem Sender und einem Empfänger für einen Schlüssel zur Verschlüsselung einer Nachricht in einem Glasfasernetz. Das erfindungsgemäße System umfasst dabei mindestens den Sender und den Empfänger und mindestens zwei den Sender und den Empfänger verbindende Quantenkanäle einer jeweiligen Glasfaser und mindestens einen Datenkanal, der einem der disjunkten Quantenkanäle durch zufällige Auswahl temporär überlagert ist. Zumindest der Sender ist dazu ausgelegt, mindestens zwei Photonen miteinander zu verschränken und je ein Photon über je einen Quantenkanal der mindestens zwei Quantenkanäle mit einer Wellenlänge λ_{EQSE} von dem Sender zu dem Empfänger zu senden, wobei die mindestens zwei Quantenkanäle zueinander disjunkt sind.

Ferner ist zumindest der Sender dazu ausgelegt, zu einem zufällig gewählten Zeitpunkt und für eine zufällig gewählte Dauer über den Datenkanal, der für die zufällig gewählte Dauer einem der disjunkten Quantenkanäle durch zufällige Auswahl überlagert ist, in einer Schlüsselsendephase das Schlüsselmaterial von dem Sender zu dem Empfänger zu senden, wobei der Datenkanal im Vergleich zu den jeweiligen mindestens zwei Quantenkanälen für eine um mehrere Größenordnungen höhere Leistung ausgelegt ist.

In weiterer Ausgestaltung des erfindungsgemäßen Systems ist der Empfänger dazu ausgelegt, in beliebig gewählten zeitlichen Abständen in einer Bellmessung zu prüfen, ob die von dem Empfänger über die zueinander disjunkten Quantenkanäle empfangenen Photonen zum Zeitpunkt der Bellmessung noch miteinander verschränkt sind und, falls die Bellmessung ergibt, dass die Photonen nicht verschränkt sind, festzustellen, dass zum Zeitpunkt der jeweiligen Bellmessung auf mindestens einem der mindestens zwei Quantenkanäle und bei der Wellenlänge λ_{EQSE} ein potentieller Abhörer existiert, wobei dann zumindest das in der der Bellmessung zuletzt vorangegangenen Schlüsselsendephase übermittelte Schlüsselmaterial verworfen wird.

In weiterer Ausgestaltung des erfindungsgemäßen Systems sind der Empfänger als Empfänger und als Sender und der Sender als Sender und Empfänger konfiguriert und können entsprechend mit vertauschten Rollen agieren.

Das erfindungsgemäße System ist insbesondere dazu konfiguriert, ein voranstehend beschriebenes Verfahren auszuführen.

Ferner betrifft die vorliegende Erfindung ein Computerprogrammprodukt mit einem computerlesbaren Medium und einem auf dem computerlesbaren Medium gespeicherten Computerprogramm mit Programmcodemitteln, die dazu konfiguriert sind, bei Ablauf des Computerprogramms auf einer Recheneinheit, insbesondere als Komponente eines voranstehend beschriebenen erfindungsgemäßen Systems, ein voranstehend beschriebenes erfindungsgemäßes Verfahren auszuführen.

Mit dem erfindungsgemäßen System kann realisiert werden, dass stufenlos zwischen Sicherheitsanforderungen und Performance, d. h. Schlüsselaustauschrate, überblendet werden kann. Überblendparameter sind dabei das mittlere Tastverhältnis, das Verhältnis der jeweiligen mittleren Dauer zwischen

Quantenübertragung, d. h. Übertragung der verschränkten Photonen, und leistungsstarkem Datenkanal mit dem Schlüsselmaterial, d. h. der Schlüsselsendephasen. Da eine jeweilige Dauer ein Zufallsprozess ist, kann Eve hier keine Vorhersage machen und zerstört so bei einem Angriff mit einer vorhersehbaren Regelmäßigkeit die verschränkten Quantenzustände, d. h. die Verschränkung der Photonen, und verpasst große Teile des Schlüssels.

Wesentliche Vorteile der Erfindung sind darin zu sehen, dass durch eine Entkopplung von einer Übertragung von Schlüsselmaterial und einer quantenmechanischen Überwachungsfunktion eine effektive Schlüsselaustauschrate gegenüber bekannten Verfahren um mehrere Größenordnungen gesteigert werden kann. Ferner werden damit bisher eingesetzte Block Cipher-Verfahren, wie AES, wobei man durch komplexe mathematische Verfahren eine Art "Schlüsselverlängerung" formuliert, nicht mehr notwendig. Selbstverständlich kann die Erfindung jedoch auch in Kombination mit AES oder anderen bekannten Verfahren verwendet werden. Beweisbare sichere One-Time-Pads können verwendet werden, die keinen Seitenkanalattacken oder Codebook-Attacken ausgesetzt sind.

Erfindungsgemäß werden die vorzusehenden Quantenkanäle durch unmodulierte Quanten bzw. Photonen betrieben, was bedeutet, dass teure optische Modulatoren an dieser Stelle wegfallen. Eine Überwachung auf Empfängerseite bzw. Bobs Seite vereinfacht sich, weil komplexe Messungen von Quantenzuständen in den verschiedenen Varianten der bisher bekannten QKD-Verfahren, wie bspw. sich schnell ändernde Polarisationszustände, durch relativ einfache Bellmessungen ersetzt werden, da eine Verschränkung von Photonen in allen Basen dieselbe sein muss.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im Folgenden unter Bezugnahme auf die Zeichnung ausführlich beschrieben.

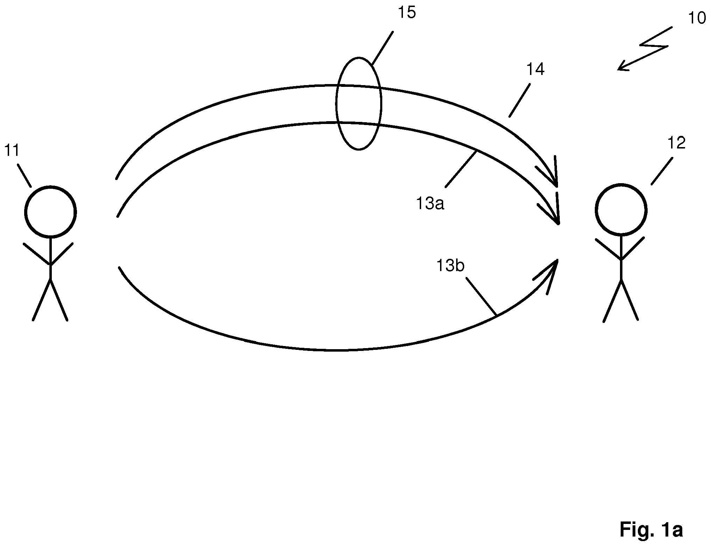

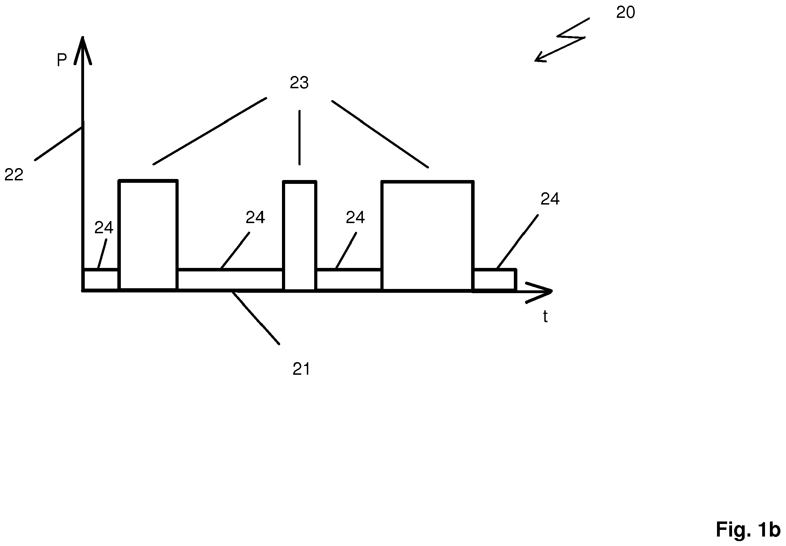

- Figur 1: zeigt in schematischer Darstellung eine Ausführungsform des erfindungsgemäßen Verfahrens durch Verwendung einer Ausführungsform des erfindungsgemäßen Systems.

Figur 1a zeigt in schematischer Darstellung eine Ausführungsform des erfindungsgemäßen Systems 10 zum abhörsicheren Austausch von Schlüsselmaterial zwischen einem Sender 11 und einem Empfänger 12 für einen Schlüssel zur Verschlüsselung einer Nachricht in einem Glasfasernetz. Anhand des schematisch gezeigten Systems 10 ist ebenfalls schematisch eine Ausführungsform des erfindungsgemäßen Verfahrens dargestellt. Von einem Sender 11, der wie voranstehend bereits erläutert, auch als Alice bezeichnet wird, werden mindestens zwei Photonen miteinander verschränkt, was bedeutet, dass die Photonen miteinander dadurch gekoppelt werden, dass sie eine gemeinsame Eigenschaft aufweisen, die aufgrund der Gesetze der Quantenmechanik auch über große Distanzen, d. h. über die Wegstrecke zum Empfänger 12 und über die Entfernung zwischen den zueinander disjunkten Quantenkanäle, über welche die miteinander verschränkten Photonen gesendet werden, aufrechterhalten und nicht ohne Störung aufgelöst werden kann. Bspw. werden die Photonen, die aus einem Ursprungszustand ohne Polarisation entstanden sind, so polarisiert, dass die jeweiligen Polarisationen aller von dem Sender 11 präparierten und gleichzeitig an den Empfänger 12 übermittelten Photonen in Summe eine Gesamtpolarisation von 0 ergeben. Die so verschränkten Photonen, wobei bei dem hier gezeigten Beispiel zwei Photonen miteinander verschränkt werden, werden jeweils über je einen Quantenkanal 13a bzw. 13b einer jeweiligen Glasfaser 15 des Glasfasernetzes mit einer Wellenlänge λ_{EQSE} von dem Sender 11 zu dem Empfänger 12 gesendet. Die zwei Quantenkanäle 13a und 13b sind zueinander disjunkt, d. h. völlig unabhängig voneinander und in keinster Weise miteinander verknüpft. Der Sender 11 sendet dabei miteinander verschränkte Photonen an den Empfänger, wobei pro Photon je ein Quantenkanal 13a bzw. 13b und damit je eine Glasfaser genutzt wird. Diese miteinander verschränkten Photonen werden von dem Empfänger 12 empfangen und in beliebig gewählten zeitlichen Abständen durch eine Bellmessung auf ihre Verschränkung hin überprüft. Stellt der Empfänger 12 fest, dass die von ihm empfangenen Photonen zum Zeitpunkt der von ihm durchgeführten Bellmessung nicht miteinander verschränkt sind, so kann er feststellen, dass zum Zeitpunkt der Bellmessung auf mindestens einem der zwei Quantenkanäle 13a bzw. 13b und bei der Wellenlänge λ_{EQSE} ein potenzieller Abhörer existiert und die miteinander verschränkten Photonen gestört hat, so dass die Verschränkung der Photonen untereinander aufgelöst wurde. Infolge der Feststellung der Auflösung der Verschränkung und der Schlussfolgerung daraus, dass ein potenzieller Abhörer existiert, wird das über den Datenkanal zuletzt übermittelte Schlüsselmaterial verworfen, so dass der potenzielle Abhörer keine Möglichkeit hat, Schlüsselmaterial, das tatsächlich letztlich zur Verschlüsselung der Nachricht verwendet wird, einzusehen.

Während die Übertragung von Photonen über jeweilige Quantenkanäle 13a bzw. 13b vom Sender 11 zum Empfänger 12 im Wesentlichen fortlaufend erfolgt, wird zu einem zufällig gewählten Zeitpunkt und für eine zufällig gewählte Dauer über einen Datenkanal 14, der einem der disjunkten Quantenkanäle, hier Quantenkanal 13a, durch zufällige Auswahl überlagert wird, in einer Schlüsselsendephase das Schlüsselmaterial von dem Sender 11 zu dem Empfänger 12 gesendet. Während der Dauer der Schlüsseldendephase kann der von dem Datenkanal überlagerte Quantenkanal, hier Quantenkanal 13a, abgeschaltet werden. Letzteres muss aber nicht notwendigerweise geschehen, denn die über die jeweiligen Quantenkanäle 13a, 13b versendeten Einzelphotonen werden praktisch vollständig durch den massiven, das Schlüsselmaterial umfassenden, Photonenstrom des Datenkanals 14 maskiert, da dieser eine viele Größenordnungen höhere Leistung aufweist und ein Eigenrauschen hat, dessen Varianz ebenfalls ein Vielfaches über der des jeweiligen Quantenkanals 13a bzw. 13b liegt. Dies ist in Figur 1b dargestellt.

Figur 1b zeigt ein Diagramm 20, welches über eine Abszisse 21 und eine Ordinate 22 aufgespannt ist. Auf der Abszisse 21 ist die Zeit t und auf der Ordinate 22 die Leistung P aufgetragen. Die in zufällig gewählten Schlüsselsendephasen übermittelten Daten über den Datenkanal 14 sind hier durch zeitlich unregelmäßig erscheinende Datenblöcke 23 dargestellt. Der über die jeweilige Quantenkanäle 13a bzw. 13b übertragene Photonenstrom der übertragenen jeweils verschränkten Photonen ist durch das Bezugszeichen 24 kenntlich gemacht. Wie dem Diagramm zu entnehmen ist, sind die Einzelphotonen 24 während einer Schüsselsendephase 23 durch die während der Schlüsselsendephase 23 übertragenen Photonen maskiert, d.h. die der Übertragung der Einzelphotonen entsprechende Leistung liegt weit unter der den in den Schlüsselsendephasen übermittelten Daten entsprechende Leistung, so dass während einer Schlüsselsendephase 23 der von dem klassischen Datenkanal 14 überlagerte Quantenkanal 13a nicht deaktiviert werden muss.

Der im Vergleich zu den Quantenkanälen 13a bzw. 13b leistungsstarke Datenkanal 14 wird erfindungsgemäß zeitlich zufällig hinzugeschaltet und abgeschaltet. Dieses zeitlich zufällige Hinzunehmen des eigentlich für einen potenziellen Abhörer interessanten Datenkanals 14 zwingt einen potenziellen Abhörer dazu, ständig oder in kurzen regelmäßigen Abständen eine Messung vornehmen zu müssen. Sollte der Abhörer hierbei zeitlich in eine Übertragungsphase der verschränkten Photonenübertragung treffen, stört er hierbei jedes Mal die Verschränkung der Photonen, was wiederum beim Empfänger 12 als ein Abhören nachweisbar ist. Sollte der Empfänger 12 zum Zeitpunkt der von ihm durchgeführten Bellmessung feststellen, dass die erwartete Verschränkung zwischen den empfangenen Photonen nicht gegeben ist, so wird das zuletzt in dem dem Quantenkanal überlagerten Datenkanal übermittelte Schlüsselmaterial verworfen.

Da ein potenzieller Abhörer nicht wissen kann, in welchem der beiden disjunkten Quantenkanäle 13a bzw. 13b im nächsten Schritt bzw. bei der nächsten Schlüsselsendephase das Schlüsselmaterial über einen dem jeweiligen Quantenkanal überlagerten Datenkanal 14 übermittelt wird, kann der Abhörer nicht allein auf eine Überwachung der Intensität vertrauen, wobei selbst bei einer bloßen Überwachung der Intensität die Verschränkung der Photonen aufgelöst werden würde. Erfindungsgemäß wird sowohl der Zeitpunkt des Zuschaltens des Datenkanals 14 als auch die Dauer der Schlüsselsendephasen 23, wie durch die unterschiedliche zeitliche Breite der Datenblöcke 23 angedeutet, zufällig gewählt, damit ein Abhörer keine optimale Strategie entwickeln kann, um nicht doch einen kleinen Informationsvorteil zu erlangen.

Da der Sender 11 weiß, welches Schlüsselmaterial an den Empfänger 12 gesendet wurde, muss der Empfänger 12 nur noch in einer Nachbearbeitungsphase über den Datenkanal 14 diejenigen Schlüsselanteile bestätigen, in denen die statistische Analyse keine Abweichung und damit kein Indiz für ein Abhören durch einen potenziellen Abhörer ergeben hat. Eine derartige Bestätigung kann bspw. für eine zeitliche Synchronisation zwischen Sender 11 und Empfänger 12 erfolgen und indem bspw. die Schlüsselsendephasen 23, in welchen Schlüsselmaterial übermittelt wird, zeitlich durchnummeriert werden. Jedoch sind auch andere geeignete Kontrollprotokolle denkbar.

Für eine weitere Absicherung des eigentlichen Informationsaustauschs, d. h. der Übermittelung des Schlüsselmaterials zwischen Sender 11 und Empfänger 12, ist es denkbar, analog zu dem Verfahren zwischen Sender 11 und Empfänger 12 ein Übermittlungsverfahren zwischen Empfänger 12 und Sender 11 mit vertauschten Rollen einzusetzen. Das bedeutet, dass dabei dann der Empfänger 12 als Sender und der Sender 11 als Empfänger fungiert.

In angemessenen zeitlichen Intervallen einigen sich Sender 11 und Empfänger 12 auf bis dahin auf beiden Seiten angesammeltes Schlüsselmaterial. Dieses Schlüsselmaterial besteht auf beiden Seiten aus dem jeweils selbst versandten Rohschlüsselmaterial und dem abhörgeschützten, jeweils von der entsprechend anderen Seite empfangenen Rohschlüsselmaterial. Jeder der Partner, d. h. Sender 11 und Empfänger 12, für sich ver-XOR-t diese beiden Typen von Schlüsselmaterial und erzeugt damit auf seiner Seite einen Teil des symmetrischen Schlüssels.

Um das erfindungsgemäße Verfahren möglichst sicher zu machen, wird ein zeitliches Umtasten zwischen Einzelquantenübertragung, d. h. zwischen Übertragung der miteinander verschränkten Photonen über die jeweiligen Quantenkanäle 13a bzw. 13b und dem leistungsstarken Datenkanal 14, d. h. der Schlüsselsendephasen durch einen Zufallsprozess realisiert. Dies wird so gewählt, dass ein Zeitfenster für die Übertragung der miteinander verschränkten Photonen lange genug ist für eine zuverlässige Statistik der durch den Empfänger 12 durchzuführenden Bellmessung, aber auch so kurz wie möglich ist, um eine akzeptabel hohe Austauschrate für das vom Sender 11 zum Empfänger 12 zu übertragende Schlüsselmaterial zu erreichen.

## Patentansprüche

1. Verfahren zum abhörsicheren Austausch von Schlüsselmaterial zwischen einem Sender (11) und einem Empfänger (12) für einen Schlüssel zur Verschlüsselung einer Nachricht in einem Glasfasernetz, wobei mindestens zwei Photonen miteinander verschränkt werden und je ein Photon über je einen Quantenkanal (13a, 13b) einer Glasfaser (15) mit einer Wellenlänge λ_{EQSE} von dem Sender (11) zu dem Empfänger (12) gesendet wird, wobei die mindestens zwei Quantenkanäle (13a, 13b) zueinander disjunkt sind, und wobei zu einem zufällig gewählten Zeitpunkt und für eine zufällig gewählte Dauer über einen Datenkanal (14), der einem der disjunkten Quantenkanäle (13a, 13b) durch zufällige Auswahl überlagert wird, in einer Schlüsselsendephase das Schlüsselmaterial von dem Sender (11) zu dem Empfänger (12) gesendet wird, wobei der Datenkanal (14) im Vergleich zu den jeweiligen mindestens zwei Quantenkanälen (13a, 13b) für eine um mehrere Größenordnungen höhere Leistung ausgelegt wird.

2. Verfahren nach Anspruch 1, bei dem der Empfänger (12) in beliebig gewählten zeitlichen Abständen in einer Bellmessung prüft, ob die von dem Empfänger (12) empfangenen Photonen zum Zeitpunkt der Bellmessung noch miteinander verschränkt sind.

3. Verfahren nach Anspruch 2, bei dem der Empfänger (12), falls die Bellmessung ergibt, dass die Photonen nicht verschränkt sind, feststellt, dass zum Zeitpunkt der Bellmessung auf mindestens einem der mindestens zwei Quantenkanäle (13a, 13b) und bei der Wellenlänge λ_{EQSE} ein potentieller Abhörer existiert, wobei dann das zuletzt über den Datenkanal (14) übermittelte Schlüsselmaterial verworfen wird.

4. Verfahren nach einem der voranstehenden Ansprüche, bei dem die Photonen, die originär aus einem Ursprungszustand ohne Polarisation entstanden sind, auf Seiten des Senders (11) derart miteinander verschränkt werden, dass eine Summe der jeweiligen Polarisationen der Photonen eine Gesamtpolarisation von Null ergibt.

5. Verfahren nach einem der voranstehenden Ansprüche, bei dem derjenige Quantenkanal (13a), dem der Datenkanal (14) überlagert wird, für die Dauer der Übertragung des Schlüsselmaterials über den Datenkanal (14) deaktiviert bzw. abgeschaltet wird.

6. Verfahren nach einem der Ansprüche 2 bis 5, bei dem der Empfänger (12), falls die Bellmessung ergibt, dass die Photonen noch verschränkt sind, feststellt, dass zum Zeitpunkt der Bellmessung auf keinem der mindestens zwei Quantenkanäle (13a, 13b) und bei der Wellenlänge λ_{EQSE} ein potentieller Abhörer existiert, und der Empfänger (12) die in einer den Zeitpunkt der Bellmessung umfassenden oder dem Zeitpunkt der Bellmessung zuletzt vorangegangenen Schlüsselsendephase übermittelten Schlüsselanteile des Schlüsselmaterials gegenüber dem Sender (11) über den Datenkanal (14) bestätigt.

7. Verfahren nach Anspruch 6, bei dem der Empfänger (12) die in der den Zeitpunkt der Bellmessung umfassenden oder dem Zeitpunkt der Bellmessung zuletzt vorangegangenen Schlüsselsendephase übermittelten Schlüsselanteile des Schlüsselmaterials gegenüber dem Sender (11) durch eine zeitliche Synchronisation zwischen Sender (11) und Empfänger (12) und/oder anhand einer der den Zeitpunkt der Bellmessung umfassenden oder dem Zeitpunkt der Bellmessung zuletzt vorangegangenen Schlüsselsendephase zugeordneten Sendenummer, wobei alle Schlüsselsendephasen durchnummeriert und mit einer jeweiligen Sendenummer versehen werden, und/oder durch ein Kontrollprotokoll bestätigt.

8. Verfahren nach einem der voranstehenden Ansprüche, bei dem zusätzlich zu dem vom Sender (11) zum Empfänger (12) übermittelten Schlüsselmaterial umgekehrt Schlüsselmaterial vom Empfänger (12) zum Sender (11) übermittelt wird, wobei dabei dann der Empfänger (12) als Sender und der Sender (11) als Empfänger agiert, und ein Verfahren nach einem der voranstehenden Ansprüche ausgeführt wird.

9. Verfahren nach einem der voranstehenden Ansprüche, bei dem sich Sender (11) und Empfänger (12) in festgelegten zeitlichen Intervallen auf innerhalb eines jeweiligen Intervalls auf Sender- und Empfängerseite angesammeltes Schlüsselmaterial einigen, was dann sowohl auf Sender- als auch auf Empfängerseite ver -XOR-t wird, wodurch sowohl auf Sender- als auch auf Empfängerseite jeweils ein Teil eines symmetrischen Schlüssels als der Schlüssel zur Verschlüsselung der Nachricht erzeugt wird.

10. System zum abhörsicheren Austausch von Schlüsselmaterial zwischen einem Sender (11) und einem Empfänger (12) für einen Schlüssel zur Verschlüsselung einer Nachricht in einem Glasfasernetz, das mindestens den Sender (11) und den Empfänger (12) und mindestens zwei den Sender (11) und den Empfänger (12) verbindende Quantenkanäle (13a, 13b) und mindestens einen Datenkanal (14), der einem der disjunkten Quantenkanäle (13a, 13b) je einer Glasfaser (15) durch zufällige Auswahl temporär überlagert ist, umfasst, wobei zumindest der Sender (11) dazu ausgelegt ist, mindestens zwei Photonen miteinander zu verschränken und je ein Photon über je einen Quantenkanal (13a, 13b) der mindestens zwei Quantenkanäle (13a, 13b) mit einer Wellenlänge λ_{EQSE} von dem Sender (11) zu dem Empfänger (12) zu senden, wobei die mindestens zwei Quantenkanäle (13a, 13b) zueinander disjunkt sind, und wobei zumindest der Sender (11) ferner dazu ausgelegt ist, zu einem zufällig gewählten Zeitpunkt und für eine zufällig gewählte Dauer über den Datenkanal (14), der für die zufällig gewählte Dauer einem der disjunkten Quantenkanäle (13a, 13b) durch zufällige Auswahl überlagert ist, in einer Schlüsselsendephase das Schlüsselmaterial von dem Sender (11) zu dem Empfänger (12) zu senden, wobei der Datenkanal (14) im Vergleich zu den jeweiligen mindestens zwei Quantenkanälen (13a, 13b) für eine um mehrere Größenordnungen höhere Leistung ausgelegt ist.

11. System nach Anspruch 10, bei dem der Empfänger (12) dazu ausgelegt ist, in beliebig gewählten zeitlichen Abständen in einer jeweiligen Bellmessung zu prüfen, ob die von dem Empfänger (12) empfangenen Photonen zum Zeitpunkt der jeweiligen Bellmessung noch miteinander verschränkt sind und, falls die jeweilige Bellmessung ergibt, dass die Photonen nicht verschränkt sind, festzustellen, dass zum Zeitpunkt der Bellmessung auf mindestens einem der mindestens zwei Quantenkanäle (13a, 13b) und bei der Wellenlänge λ_{EQSE} ein potentieller Abhörer existiert, wobei dann das in der dem Zeitpunkt der Bellmessung zuletzt vorangegangenen Schlüsselsendephase übermittelte Schlüsselmaterial verworfen wird.

12. System nach Anspruch 10 oder 11, bei dem der Empfänger (12) als Empfänger und als Sender und der Sender (11) als Sender und Empfänger konfiguriert sind und entsprechend mit vertauschten Rollen agieren können.

13. System nach einem der Ansprüche 10 bis 12, das dazu konfiguriert ist, ein Verfahren nach einem der Ansprüche 1 bis 9 auszuführen.

14. Computerprogrammprodukt mit einem computerlesbaren Medium und einem auf dem computerlesbaren Medium gespeicherten Computerprogramm mit Programmcodemitteln, die dazu konfiguriert sind, bei Ablauf des Computerprogramms auf einer Recheneinheit, als Komponente eines Systems nach einem der Ansprüche 10 bis 13, ein Verfahren nach einem der Ansprüche 1 bis 9 auszuführen.

## Claims

1. A method for exchanging key material with no possibility of interception between a sender (11) and a receiver (12) for a key for encrypting a message in a glass fiber network, wherein at least two photons are entangled with one another and one photon is sent via a quantum channel (13a, 13b) of a glass fiber (15) with a wavelength A_{EQSE} from the sender (11) to the receiver (12), wherein the at least two quantum channels (13a, 13b) are disjunct relative to one another, and wherein, at a randomly selected time and for a randomly selected duration, the key material is sent in a key transmission phase from the sender (11) to the receiver (12) via a data channel (14) that is superimposed on one of the disjunct quantum channels (13a, 13b) by random selection, wherein the data channel (14) is designed for a power many orders of magnitude greater than that of the respective two or more quantum channels (13a, 13b).

2. The method according to claim 1, in which the receiver (12) checks, at randomly selected time intervals of a Bell measurement, whether the photons received by the receiver (12) are still entangled with one another at the time of the Bell measurement.

3. The method according to claim 2, in which the receiver (12), if the Bell measurement shows that the photons are not entangled, determines that at the time of the Bell measurement on at least one of the at least two quantum channels (13a, 13b) and at the wavelength A_{EQSE} there exists a potential interceptor, whereupon the key material most recently transmitted via the data channel (14) is then discarded.

4. The method according to one of the preceding claims in which the photons that originally resulted from an original condition without polarization are entangled on the side of the sender (11) such that a sum of the respective polarizations of the photons results in zero total polarization.

5. The method according to any of the preceding claims, in which the quantum channel (13a) that is superimposed on the data channel (14) is deactivated and/or switched off for the duration of the transmission of the key material via the data channel (14).

6. The method according to claims 2 to 5, in which the receiver (12), provided the Bell measurement shows that the photons are still entangled, determines that at the moment of the Bell measurement no potential interceptor exists on any of the at least two quantum channels (13a, 13b) and at the wavelength λ_{EQSE}, and the receiver (12) confirms to the sender (11) via the data channel (14) the key portions of the key material transferred during a key transmission phase comprising the moment of the Bell measurement or the time of the key transmission phase directly preceding the moment of the Bell measurement.

7. The method according to claim 6 in which the receiver (12) confirms to the sender (11) the key portions of the key material transferred during the key transmission phase comprising the moment of the Bell measurement or the key transmission phase directly preceding the moment of the Bell measurement, by way of temporal synchronization between the sender (11) and the receiver (12) and/or based on an associated transmission number comprising the moment of the Bell measurement or the key transmission phase directly preceding the moment of the Bell measurement, wherein all key transmission phases are sequentially numbered and given a respective transmission number, and/or by way of a check log.

8. The method according to any of the preceding claims, in which, in addition to the key material transmitted from the sender (11) to the receiver (12), key material is conversely sent from the receiver (12) to the sender (11), wherein the receiver (12) then acts as sender and the sender (11) acts as receiver, and a method according to any of the preceding claims is executed.

9. The method according to any of the preceding claims, in which the sender (11) and the receiver (12), at set time intervals, agree upon the key material collected on the sender and receiver side during each respective interval, which is then subjected to a XOR operation on both the sender as well as the receiver side, whereby a part of a symmetrical key is generated both on the sender as well as the receiver side as the key for encrypting the message.

10. A system for exchanging key material between a sender (11) and a receiver (12) with no possibility of interception, for a key to encrypt a message in a glass fiber network that comprises at least the sender (11) and the receiver (12) and at least two quantum channels (13a, 13b) connecting the sender (11) and the receiver (12) and at least one data channel (14) that is temporarily superimposed on the disjunct quantum channels (13a, 13b) of each glass fiber (15) by random selection, wherein at least the sender (11) is designed to entangle at least two photons with one another and to send one photon via each quantum channel (13a, 13b) of the at least two quantum channels (13a, 13b) with a wavelength A_{EQSE} from the sender (11) to the receiver (12), wherein the at least two quantum channels (13a, 13b) are disjunct relative to one another, and wherein at least the sender (11) is furthermore designed to send, during a key transmission phase, at a randomly selected time and for a randomly selected duration, via the data channel (14) that is superimposed by random selection on one of the disjunct quantum channels (13a, 13b) for the randomly selected duration, the key material from the sender (11) to the receiver (12), wherein the data channel (14) is designed for a power many orders of magnitude greater than that of the respective at least two quantum channels (13a, 13b).

11. The system according to claim 10, in which the receiver is designed to check at randomly selected intervals during a respective Bell measurement whether the photons received by the receiver (12) are still entangled at the moment of the respective Bell measurement and, if the respective Bell measurement reveals that the photons are not entangled, to determine that at the time of the Bell measurement a potential interceptor exists on at least one of the at least two quantum channels (13a, 13b) and at the wavelength λ_{EQSE}, wherein the key material transmitted during the key transmission phase directly preceding the time of the Bell measurement is then discarded.

12. The system according to claim 10 or 11, in which the receiver (12) is configured as receiver and sender and the sender (11) is configured as sender and receiver, and each can act with reversed roles.

13. The system according to any of claims 10 to 12, configured to execute a method according to one of claims 1 to 9.

14. A computer program product with a computer-readable medium and a computer program saved on the computer-readable medium with program coding means that are configured to execute a method according to any of claims 1 to 9 when the computer program is run on a computer unit as a component of a system according to any of claims 10 to 13.

## Revendications

1. Procédé d'échange sécurisé d'un matériau cryptographique entre un émetteur (11) et un récepteur (12) pour une clé de cryptage d'un message dans un réseau de fibre optique, dans lequel au moins deux photons sont intriqués entre eux et chaque photon est envoyé par un canal quantique (13a, 13b) d'une fibre optique (15) d'une longueur d'onde λ_{EQSE} de l'émetteur (11) au récepteur (12), sachant qu'au moins deux canaux quantiques (13a, 13b) sont mutuellement disjoints et qu'à un moment aléatoire et pendant une durée aléatoire, le matériau cryptographique est envoyé de l'émetteur (11) au récepteur (12) lors d'une phase de transmission de clé via un canal de données (14) superposé aléatoirement à l'un des canaux quantiques (13a, 13b) disjoints, ledit canal de données (14) étant conçu pour une puissance supérieure, de plusieurs ordres de grandeur, à celle des canaux quantiques (13a, 13b) correspondants qui sont au moins au nombre de deux.

2. Procédé selon la revendication 1, dans lequel le récepteur (12) vérifie à des intervalles temporels arbitraires par une mesure de Bell si les photons reçus par le récepteur (12) restent intriqués entre eux au moment de la mesure de Bell.

3. Procédé selon la revendication 2, dans lequel, si la mesure de Bell révèle que les photons ne sont pas intriqués, le récepteur (12) détecte l'existence d'un dispositif d'écoute potentiel au moment de la mesure de Bell sur au moins l'un des deux canaux quantiques (13a, 13b) et à la longueur d'onde λ_{EQSE}, sachant que le matériau cryptographique transmis en dernier lieu par le canal de données (14) est alors rejeté.

4. Procédé selon l'une des revendications précédentes, dans lequel les photons, dont l'état initial n'est pas intrinsèquement un état de polarisation, sont intriqués entre eux du côté de l'émetteur (11) de telle manière que le total des polarisations correspondantes des photons est zéro.

5. Procédé selon l'une des revendications précédentes, dans lequel le canal quantique (13a) auquel se superpose le canal de données (14) est désactivé ou déconnecté pendant la durée de la transmission du matériau cryptographique via le canal de données (14).

6. Procédé selon l'une des revendications 2 à 5, dans lequel, si la mesure de Bell révèle que les photons restent intriqués, le récepteur (12) ne détecte l'existence d'un dispositif d'écoute potentiel au moment de la mesure de Bell sur aucun des deux canaux quantiques (13a, 13b) et à la longueur d'onde λ_{EQSE}, et le récepteur (12) confirme à l'émetteur (11) les éléments cryptographiques du matériau cryptographique, transmis lors d'une phase de transmission de clé comprenant le moment de la mesure de Bell ou ayant précédé immédiatement le moment de la mesure de Bell, via le canal de données (14).

7. Procédé selon la revendication 6, dans lequel le récepteur (12) confirme à l'émetteur (11) les éléments cryptographiques du matériau cryptographique, transmis lors de la phase de transmission cryptée comprenant le moment de la mesure de Bell ou ayant précédé immédiatement le moment de la mesure de Bell, au moyen d'une synchronisation temporelle entre l'émetteur (11) et le récepteur (12) et/ou à l'aide d'un numéro d'envoi attribué à la phase de transmission cryptée comprenant le moment de la mesure de Bell ou ayant précédé immédiatement le moment de la mesure de Bell, toutes les phases de transmission cryptée étant numérotées et dotées d'un numéro d'envoi correspondant, et/ou au moyen d'un protocole de contrôle.

8. Procédé selon l'une des revendications précédentes, dans lequel, en plus du matériau cryptographique transmis de l'émetteur (11) au récepteur (12), le matériau cryptographique est transmis inversement du récepteur (12) à l'émetteur (11), sachant que le récepteur (12) agit alors comme émetteur et que l'émetteur (11) agit alors comme récepteur, et un procédé est réalisé selon l'une des revendications précédentes.

9. Procédé selon l'une des revendications précédentes, dans lequel l'émetteur (11) et le récepteur (12) s'accordent à des intervalles temporels déterminés sur le matériau cryptographique accumulé pendant un intervalle correspondant du côté de l'émetteur et du récepteur, ce qui passe par le cryptage XOR à la fois du côté de l'émetteur et du côté du récepteur, générant à chaque fois une portion d'une clé symétrique à la fois du côté de l'émetteur et du côté du récepteur, cette clé étant la clé de cryptage du message.

10. Système d'échange sécurisé d'un matériau cryptographique entre un émetteur (11) et un récepteur (12) pour une clé de cryptage d'un message dans un réseau de fibre optique, comprenant au moins l'émetteur (11) et le récepteur (12), au moins deux canaux quantiques (13a, 13b) reliant l'émetteur (11) et le récepteur (12) et au moins un canal de données (14) superposé temporairement à l'un des canaux quantiques (13a, 13b) disjoints d'une fibre optique (15), choisi aléatoirement, sachant qu'au moins l'émetteur (11) est conçu de manière à intriquer au moins deux photons entre eux et à envoyer chaque photon par l'un des deux canaux quantiques (13a, 13b) à une longueur d'onde λ_{EQSE} de l'émetteur (11) au récepteur (12), sachant qu'au moins les deux canaux quantiques (13a, 13b) sont mutuellement disjoints et qu'au moins l'émetteur (11) est également conçu de manière à envoyer le matériau cryptographique de l'émetteur (11) au récepteur (12) à un moment aléatoire et pendant une durée aléatoire via le canal de données (14) superposé aléatoirement pendant la durée aléatoire à l'un des canaux quantiques (13a, 13b) disjoints, lors d'une phase de transmission de clé, ledit canal de données (14) étant conçu pour une puissance supérieure, de plusieurs ordres de grandeur, à celle des canaux quantiques (13a, 13b) correspondants qui sont au moins au nombre de deux.

11. Système selon la revendication 10, dans lequel le récepteur (12) est conçu de manière à vérifier à des intervalles temporels arbitraires par une mesure de Bell correspondante, si les photons reçus par le récepteur (12) restent intriqués entre eux au moment de la mesure de Bell correspondante et à détecter, si la mesure de Bell correspondante révèle que les photons ne sont pas intriqués, l'existence d'un dispositif d'écoute potentiel au moment de la mesure de Bell sur au moins l'un des deux canaux quantiques (13a, 13b) et à la longueur d'onde λ_{EQSE}, sachant que le matériau cryptographique transmis lors de la phase de transmission cryptée ayant précédé immédiatement la mesure de Bell est alors rejeté.

12. Système selon la revendication 10 ou 11, dans lequel le récepteur (12) est configuré comme récepteur et émetteur, alors que l'émetteur (11) est configuré comme émetteur et récepteur, chacun pouvant agir en conséquence en inversant les rôles.

13. Système selon l'une des revendications 10 à 12, configuré de manière à réaliser un procédé selon l'une des revendications 1 à 9.

14. Produit de programme informatique doté d'un support lisible par ordinateur et d'un programme informatique stocké sur le support lisible par ordinateur, comportant des moyens de code de programme, qui sont configurés de manière à réaliser un procédé selon l'une des revendications 1 à 9 lors du fonctionnement du programme informatique sur une unité de calcul en tant que composante d'un système selon l'une des revendications 10 à 13.
